# EUROPÄISCHE PATENTSCHRIFT

(11) **EP 4 011 557 B1**
(45) Veröffentlichungstag und Bekanntmachung des Hinweises auf die Patenterteilung: **10.01.2024**
(21) Anmeldenummer: 21209592.1
(22) Anmeldetag: 22.11.2021
(51) Int. Cl.: B25B 15/00, F16B 23/00

(54) **SCHRAUBENDREHER-ANTRIEBSGEOMETRIE, SCHRAUBBIT UND SCHRAUBENKOPF**
SCREW DRIVER DRIVING GEOMETRY, SCREW BIT AND SCREW HEAD
GÉOMÉTRIE D'ENTRAÎNEMENT DE TOURNEVIS, EMBOUT ET TÊTE DE VIS

(30) Priorität: 10.12.2020 DE 102020133061
(43) Veröffentlichungstag der Anmeldung: 15.06.2022
(73) Patentinhaber: Berner Omnichannel Trading Holding SE, 74653 Künzelsau (DE)
(72) Erfinder: Vornefeld, Mark, 74653 Künzelsau (DE); Schapmann, Stephan, 74653 Künzelsau (DE)
(74) Vertreter: Prinz & Partner mbB

(56) Entgegenhaltungen:
- EP-A1- 0 039 414
- EP-A1- 2 691 040
- WO-A1-2010/019352
- DE-A1-102013 113 401
- DE-U1-202009 003 923
- US-A- 2 800 936
- US-A1- 2020 269 398

## Beschreibung

Die Erfindung betrifft eine Schraubendreher-Antriebsgeometrie sowie einen Schraubbit mit einer Schraubendreher-Antriebsgeometrie und einen Schraubenkopf mit einer entsprechenden Abtriebsgeometrie.

Schraubendreher-Antriebsgeometrien dienen dazu, das Drehmoment vom Schraubendreher über diese Geometrie in eine Schraube zu übertragen, um die Schraube in Rotation zu versetzen und sie in einen Untergrund einzudrehen. Um ein gutes Eindrehverhalten zu erreichen, ist eine sichere Verbindung zwischen einem Schraubendreher und einem Schraubenkopf erforderlich, die neben der guten Drehmomentübertragung eine sichere Führung des Antriebs in der Schraube ermöglicht. Die bekannten Schraubendreher-Antriebsgeometrien weisen in dieser Hinsicht Verbesserungspotenzial auf.

Die EP 2 691 040 A1 offenbart ein Antriebsinstrument mit einem Antriebsabschnitt auf einem Rohrabschnitt, welcher Zähne aufweist. Im Inneren des Rohres ist ein verschieblicher Stift als axial vorstehender Führungsabschnitt vorgesehen.

Außerdem sind aus der DE 10 2013 113401 A1 eine Schraube und ein Antriebselement zum Antrieb der Schraube bekannt. Das Antriebselement hat Zähne und einen Spitze. Dabei schließen die Zähne axial unmittelbar an den Konus der Spitze an.

Ferner zeigt die US 2 800 936 A einen Kreuzschlitzschraubendreher gemäß dem Oberbegriff des Anspruchs 1 mit einem zylinderförmigen Führungsabschnitt, welcher ein abgerundetes Ende aufweist. Ebenso sind hieraus Zähne bekannt, die axial unmittelbar an den Führungsabschnitt anschließen.

Es ist somit eine Aufgabe der vorliegenden Erfindung, eine verbesserte Schraubendreher-Antriebsgeometrie sowie einen Schraubbit und einen Schraubenkopf mit einer entsprechenden Antriebsgeometrie bereitzustellen.

Diese Aufgabe wird erfindungsgemäß gelöst durch eine Schraubendreher-Antriebsgeometrie, wobei die Antriebsgeometrie ein axiales Ende hat, mit dem voraus sie in eine Ausnehmung in einer Schraube eingeführt wird, wobei die Antriebsgeometrie einen Antriebsabschnitt und einen am axialen Ende beginnenden zylinderförmigen Führungsabschnitt hat, an den sich der Antriebsabschnitt anschließt, wobei der Antriebsabschnitt einen Grundkörper und ein sich entlang des Grundkörpers erstreckendes Mitnahmeprofil mit seitlich nach außen abstehenden Zähnen hat, wobei der Grundkörper axial unmittelbar an den Führungsabschnitt anschließt und sich in eine axiale Richtung vom Führungsabschnitt weg konusförmig aufweitet, und wobei die Zähne im Führungsabschnitt mit Abstand vom axialen Ende beginnen und sich längs des Grundkörpers erstrecken.

Anders ausgedrückt sind das Mitnahmeprofil und der Führungsabschnitt in axialer Richtung betrachtet abschnittsweise überlappend ausgebildet.

Indem sich das Mitnahmeprofil in den Führungsabschnitt erstreckt, wird der Vorteil erreicht, dass eine besonders große Flankenfläche vorhanden ist, welche es ermöglicht, ein besonders hohes Drehmoment zu übertragen.

Der lange Führungsabschnitt wiederum sorgt dafür, dass eine Schraube mit entsprechender Abtriebsgeometrie besonders stabil auf einem Bit mit der Antriebsgeometrie sitzt.

Die konusförmige Aufweitung des Grundkörpers ermöglicht zudem eine besonders einfache Einführung der Antriebsgeometrie in eine Ausnehmung einer Schraube.

Gemäß einer bevorzugten Ausführungsform ist das axiale Ende rotationssymetrisch ausgeführt.

Das axiale Ende entspricht insbesondere der Stirnseite des Führungsabschnitts.

Die Zähne erstrecken sich beispielsweise wenigstens 0,5 mm und maximal 1,5 mm, insbesondere maximal 1 mm in den Führungsabschnitt. Dadurch wird eine ausreichend große Flankenfläche gebildet, ohne dass die Führungseigenschaften des Führungsabschnitts beeinträchtigt werden.

Der Grundkörper weitet sich vorzugsweise in einem Winkel zwischen 5° und 15° auf, insbesondere in einem Winkel von 13°. Bei einem derartigen Winkel lässt sich die Antriebsgeometrie einfach in eine entsprechende Ausnehmung in einem Schraubenkopf einführen, ohne dass die Flankenfläche des Mitnahmeprofils durch die Aufweitung zu stark reduziert ist.

Gemäß einer Ausführungsform ist am axialen Ende des Führungsabschnitts eine umlaufende Fase vorgesehen. Die Fase sorgt ebenfalls für ein einfaches Einführen der Antriebsgeometrie in eine entsprechende Ausnehmung in einem Schraubenkopf.

Das Mitnahmeprofil hat vorzugsweise mehrere sich entlang des Grundkörpers erstreckende, insbesondere identisch ausgeführte Zähne, wobei die Zähne an einer zum Führungsabschnitt gerichteten Stirnseite eine Fase an ihrer radial außenliegenden Kante haben. Die Fase an den Zähnen verbessert ebenfalls das Einführen der Antriebsgeometrie in eine entsprechende Ausnehmung in einem Schraubenkopf. Insbesondere sorgt die Fase für ein einfaches Einführen des Mitnahmeprofils.

Das Mitnahmeprofil des Bits ist beispielsweise ein Torx^{®}-Profil, auch Außensechsrundprofil genannt. Durch die Verwendung eines Außensechsrundprofils werden die Schraube und ein Schraubendreher oder Schraubbit mit entsprechender Antriebsgeometrie weniger stark mit Radialkräften belastet.

Die Aufgabe wird des Weiteren erfindungsgemäß gelöst durch einen Schraubbit mit einer erfindungsgemäßen Schraubendreher-Antriebsgeometrie, die wie vorhergehend beschrieben ausgebildet ist.

Die Aufgabe wird schließlich erfindungsgemäß gelöst durch einen Schraubenkopf mit einer Ausnehmung, die eine Abtriebsgeometrie hat, welche in einem Kontaktbereich mit einer eingesteckten Schraubendreher-Antriebsgeometrie, welche wie vorhergehend beschrieben ausgebildet ist, als Negativ der Schraubendreher-Antriebsgeometrie ausgebildet ist.

"Negativ" ist in diesem Fall so zu verstehen, dass ein Luftspalt von wenigen Hundertstel bis Zehntel-Millimetern vorhanden ist, da die Schraubendreher-Antriebsgeometrie ansonsten in der Ausnehmung klemmen würde.

Indem die Abtriebsgeometrie in einem Kontaktbereich mit einer eingesteckten Schraubendreher-Antriebsgeometrie als Negativ der Schraubendreher-Antriebsgeometrie ausgebildet ist, kann ein Drehmoment optimal von einem Antrieb auf den Schraubenkopf übertragen werden, sodass ein besonders gutes Eindrehverhalten erreicht wird. Insbesondere kann die Schraubendreher-Antriebsgeometrie genau oder nahezu formschlüssig in die Ausnehmung des Schraubenkopfes eingesteckt werden.

Neben einer wie vorhergehend beschriebenen erfindungsgemäßen Antriebsgeometrie kann in der Ausnehmung des erfindungsgemäßen Schraubenkopfes auch ein handelsüblicher Außensechsrundprofil--Antrieb aufgenommen werden. Die Drehmomentübertragung ist in diesem Fall eingeschränkt, ein Eindrehen der Schraube ist jedoch möglich.

Weitere Vorteile und Merkmale der Erfindung ergeben sich aus der nachfolgenden Beschreibung und aus den Zeichnungen, auf die Bezug genommen wird. In den Zeichnungen zeigen:
- Figur 1 einen erfindungsgemäßen Schraubbit mit einer erfindungsgemäßen Schraubendreher-Antriebsgeometrie in einer perspektivischen Ansicht,
- Figur 2 den Schraubbit aus Figur 1 in einer Seitenansicht,
- Figur 3 eine Detailansicht des Bereichs A aus Figur 2,
- Figur 4 einen Längsschnitt durch den Schraubbit aus Figur 1,
- Figur 5 eine Draufsicht auf den Schraubbitt aus Figur 1,
- Figur 6 einen weiteren erfindungsgemäßen Schraubbit mit einer alternativen erfindungsgemäßen Schraubendreher-Antriebsgeometrie in einer perspektivischen Ansicht,
- Figur 7 einen erfindungsgemäßen Schraubenkopf in einer perspektivischen Ansicht,
- Figur 8 den Schraubenkopf aus Figur 7, in welchem der in Figur 6 gezeigte Schraubbit eingesteckt ist, in einer Schnittansicht, und
- Figur 9 den Schraubenkopf aus Figur 7, in welchem ein gewöhnlicher Torx-Antrieb eingesteckt ist, in einer Schnittansicht.

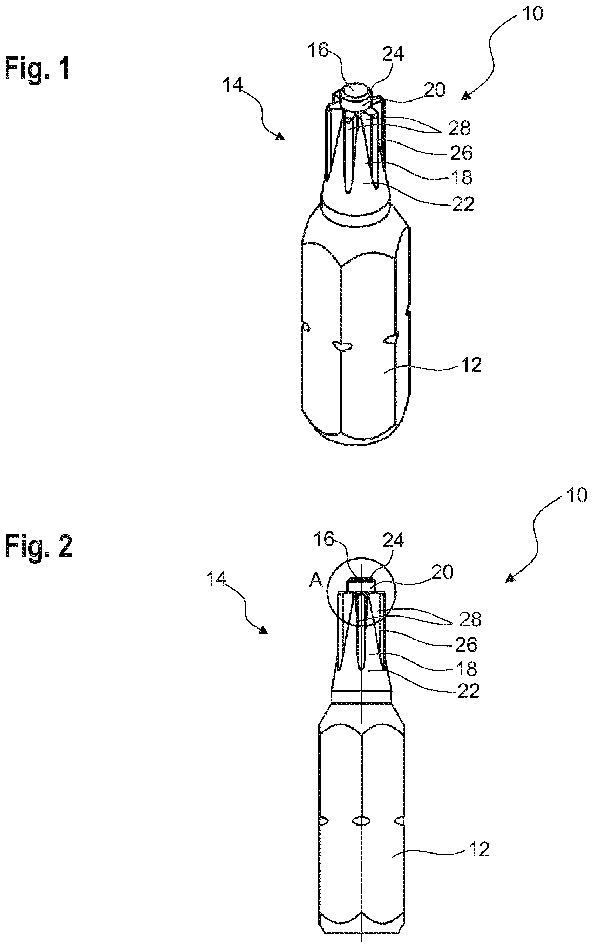

Figur 1 zeigt einen Schraubbit 10 in einer perspektivischen Ansicht.

Der Schraubbit 10 hat einen Halteabschnitt 12, mittels dem der Schraubbit 10 in einen nicht gezeigten Schraubendrehereinsatz eingesetzt werden kann.

Der Halteabschnitt 12 ermöglicht eine Mitnahmeverbindung nach ISO 1173.

Des Weiteren hat der Schraubbit 10 eine Schraubendreher-Antriebsgeometrie 14, die zum Einstecken in einen Schraubenkopf und zum Antreiben einer Schraube ausgebildet ist.

Zu diesem Zweck kann der Schraubbit 10 mit einem axialen Ende 16 voraus in eine Ausnehmung in einem Schraubenkopf eingeführt werden, um ein Drehmoment auf eine Schraube zu übertragen.

Die Antriebsgeometrie 14 hat einen Antriebsabschnitt 18 und einen am axialen Ende 16, dass eine flache Stirnseite haben kann, beginnenden zylinderförmigen Führungsabschnitt 20, wobei sich der Antriebsabschnitt 18 an den Führungsabschnitt 20 anschließt.

Der Führungsabschnitt 20 sorgt dafür, dass der Schraubbit 10, wenn er in einer entsprechenden Ausnehmung in einem Schraubenkopf eingesetzt ist, stabil in der Schraube zentriert und geführt ist, derart, dass die Längsachsen des Schraubbits 10 und der Schraube koaxial zueinander verlaufen.

Um ein Einführen der Antriebsgeometrie 14 in eine Ausnehmung in einem Schraubenkopf zu vereinfachen, kann am axialen Ende des Führungsabschnitts 20 eine umlaufende Fase 24 vorgesehen sein.

Der Antriebsabschnitt 18 dient zur Übertragung eines Drehmoments von dem Schraubbit 10 auf eine Schraube.

Der Antriebsabschnitt 18 weist einen Grundkörper 22 auf, der axial unmittelbar an den Führungsabschnitt 20 anschließt und sich in eine axiale Richtung vom Führungsabschnitt 20 weg konusförmig aufweitet.

Des Weiteren hat der Antriebsabschnitt 18 ein sich entlang des Grundkörpers 22 erstreckendes Mitnahmeprofil 26 mit seitlich nach außen abstehenden Zähnen 28, insbesondere mit mehreren identischen Zähnen 28.

Das Mitnahmeprofil 26 ist beispielsweise ein Außensechsrundprofil.

Figur 2 zeigt den Schraubbit 10 in einer Seitenansicht.

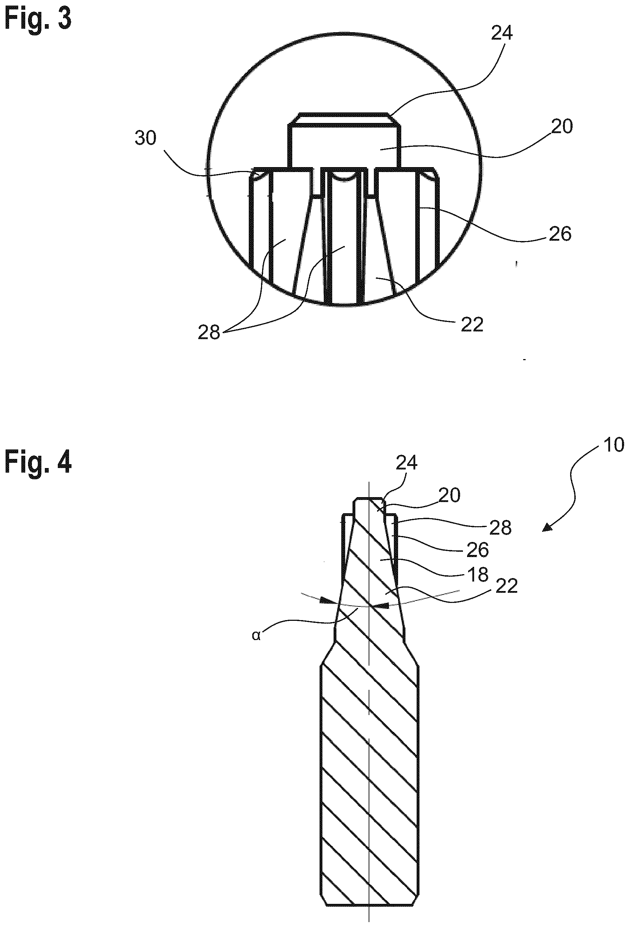

Figur 3 zeigt eine Detailansicht im Bereich des Führungsabschnitts 20.

In der Detailansicht in Figur 3 ist zu erkennen, dass die Zähne 28 im Führungsabschnitt 20 mit Abstand vom axialen Ende 16 beginnen und sich längs des Grundkörpers 22 erstrecken. Indem sich die Zähne 28 axial in den Führungsabschnitt 20 hinein erstrecken, ist die Drehmomentübertragung verbessert.

Die Zähne 28 erstrecken sich wenigstens 0,5 mm und maximal 1,5 mm, insbesondere maximal 1 mm in den Führungsabschnitt 20 hinein.

Der Führungsabschnitt 20 hat beispielsweise eine Länge von 0,8 mm bis 2,5 mm.

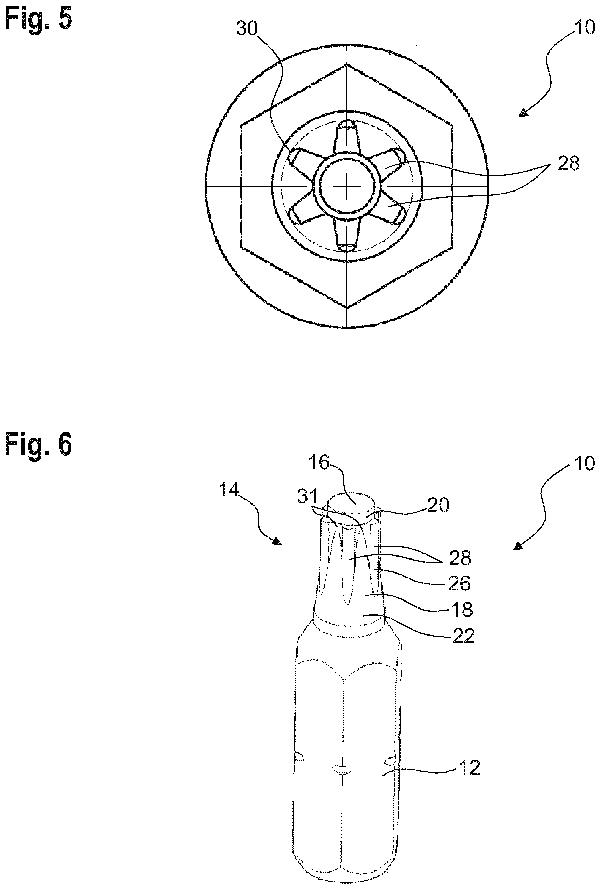

Sowohl in Figur 3 als auch in der in Figur 5 gezeigten Draufsicht auf den Schraubbit 10 ist zu erkennen, dass die Zähne 28 an einer zum Führungsabschnitt 20 gerichteten Stirnseite eine Fase 30 an ihrer radial außenliegenden Kante haben.

In der Schnittdarstellung in Figur 4 ist die Aufweitung des Grundkörpers 22 besonders deutlich zu erkennen. Insbesondere weitet sich der Grundkörper in einem Winkel α zwischen 5° und 15° auf, vorzugsweise in einem Winkel von 13°.

Die Schraubendreher-Antriebsgeometrie 14 kann statt an einem Schraubbit 10 auch an einem anderen Antriebselement ausgebildet sein, zum Beispiel an einem Schraubendreher.

Figur 6 zeigt einen weiteren Schraubbit 10 mit einer Schraubendreher-Antriebsgeometrie 14. Der Schraubbit 10 unterscheidet sich von dem Schraubbit gemäß den Figuren 1 bis 5 dadurch, dass zwischen den Zähnen 28 eine Verrundung 31 vorgesehen ist. Dadurch hat der Schraubbit 10 weniger scharfkantig Kerben, wodurch die Herstellbarkeit des Schraubbits 10 vereinfacht ist.

Des Weiteren weist der Schraubbit 10 gemäß Figur 6 keine Fasen am stirnseitigen Ende des Führungsabschnitts 20 und an den radial außenliegenden Kanten der Zähne 28 auf. Gemäß einer weiteren Ausführungsform können jedoch auch bei dem in Figur 6 dargestellten Schraubbit 10 entsprechende Fasen vorgesehen sein.

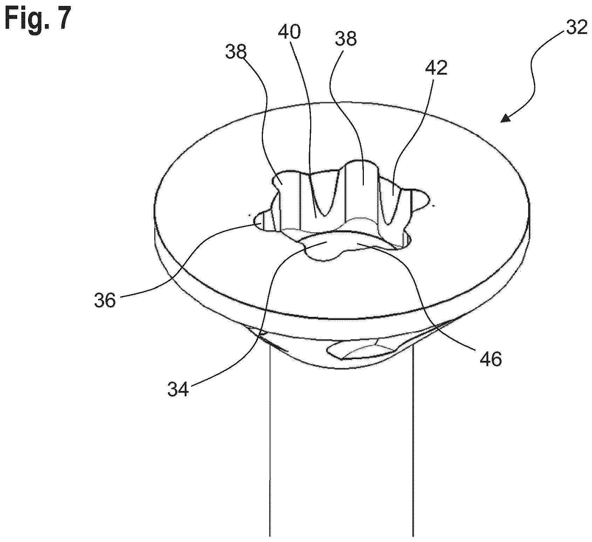

Figur 7 zeigt einen Schraubenkopf 32 mit einer Ausnehmung 34, die eine Abtriebsgeometrie 36 hat.

Die Abtriebsgeometrie 36 ist in einem Kontaktbereich mit einer eingesteckten Schraubendreher-Antriebsgeometrie 14 eines Schraubbits 10 als Negativ der Schraubendreher-Antriebsgeometrie 14 ausgebildet. Insbesondere ist die in Figur 7 gezeigte Abtriebsgeometrie 36 als Negativ der in Figur 6 gezeigten Schraubendreher-Antriebsgeometrie 14 ausgebildet. Natürlich kann ein minimales Spiel zwischen dem Schraubbit und dem Schraubenkopf 32 vorgesehen sein, um die Herstellungstoleranzen aufzufangen und um sicherzustellen, dass trotz aller Herstellungstoleranzen der Schraubbit 10 immer in den Schraubenkopf 32 eingesteckt werden kann.

Auch kann herstellungsbedingt ein Spalt zwischen dem axialen Ende 16 und dem Boden der Ausnehmung 34 vorhanden sein, die sicherstellt, dass auch bei einem geringen Schmutzeintrag in der Ausnehmung 34 der Schraubbit 10 immer noch eingesteckt werden kann und dass selbst bei herstellungsbedingt überlangem Führungsabschnitt 20 dieser nicht an den Boden der Ausnehmung 34 anstößt. Damit ist eine maximale Kontaktfläche zwischen dem Schraubenkopf und Schraubbit 10 sichergestellt.

Die Ausnehmung 34 hat insbesondere Kerben 38, die zur Aufnahme der Zähne 28 ausgebildet sind, wobei zwischen den Kerben 38 eine Verrundung 40 vorgesehen ist.

Alternativ kann die Verrundung 40 entfallen.

Im Bereich der Verrundungen 40 sind weitere Kerben 42 vorhanden, wobei die Kerben 42 einen Teil einer Mantelfläche eines konusförmigen Grundkörpers 22 der Antriebsgeometrie 14 abbilden.

Des Weiteren ist eine zylindrische Vertiefung 46 vorgesehen, in welcher der Führungsabschnitt 20 einer Antriebsgeometrie 14 aufgenommen werden kann.

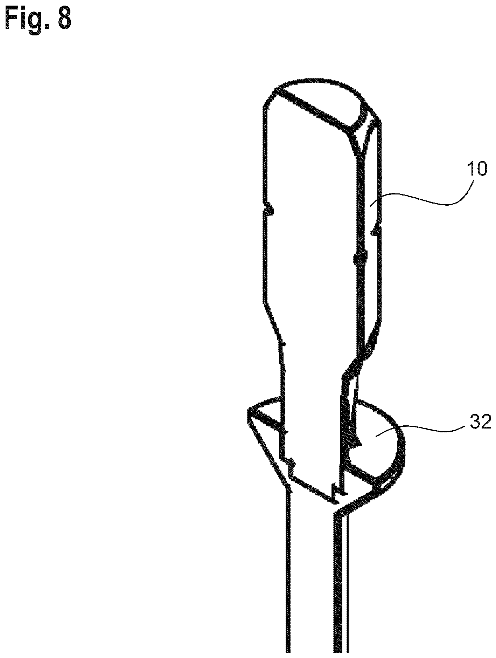

Figur 8 zeigt den Schraubenkopf 32 aus Figur 7, in den der Schraubbit 10 aus Figur 6 eingesteckt ist.

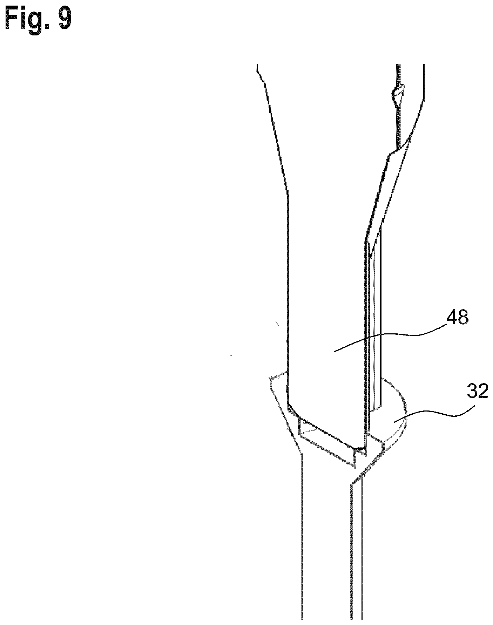

Der Schraubenkopf 32 aus Figur 7 lässt sich auch mit einem handelsüblichen Torx-Antrieb 48 antreiben, wie in Figur 9 veranschaulicht ist. Hierbei ist die Drehmomentübertragung jedoch weniger optimal als bei Verwendung eines Schraubbits 10 gemäß den Figuren 1 bis 6.

## Patentansprüche

1. Schraubendreher-Antriebsgeometrie (14), wobei die Schraubendreher-Antriebsgeometrie (14) ein axiales Ende (16) hat, mit dem voraus er in eine Ausnehmung (34) in einer Schraube eingeführt wird, wobei die Antriebsgeometrie (14) einen Antriebsabschnitt (18) und einen am axialen Ende (16) beginnenden zylinderförmigen Führungsabschnitt (20) hat, an den sich der Antriebsabschnitt (18) anschließt, wobei der Antriebsabschnitt (18) einen Grundkörper (22) und ein sich entlang des Grundkörpers (22) erstreckendes Mitnahmeprofil (26) mit seitlich nach außen abstehenden Zähnen (28) hat, wobei der Grundkörper (22) axial unmittelbar an den Führungsabschnitt (20) anschließt und sich in eine axiale Richtung vom Führungsabschnitt (20) weg konusförmig aufweitet, **dadurch gekennzeichnet, dass** die Zähne (28) im Führungsabschnitt (20) mit Abstand vom axialen Ende (16) beginnen und sich längs des Grundkörpers (22) erstrecken.

2. Schraubendreher-Antriebsgeometrie (14) nach Anspruch 1, **dadurch gekennzeichnet, dass** sich die Zähne (28) wenigstens 0,5 mm und maximal 1,5 mm, insbesondere maximal 1 mm in den Führungsabschnitt (20) erstrecken.

3. Schraubendreher-Antriebsgeometrie (14) nach einem der vorhergehenden Ansprüche, **dadurch gekennzeichnet, dass** sich der Grundkörper (22) in einem Winkel (α) zwischen 5° und 15° aufweitet, insbesondere in einem Winkel (α) von 13°.

4. Schraubendreher-Antriebsgeometrie (14) nach einem der vorhergehenden Ansprüche, **dadurch gekennzeichnet, dass** am axialen Ende (16) des Führungsabschnitts eine umlaufende Fase (24) vorgesehen ist.

5. Schraubendreher-Antriebsgeometrie (14) nach einem der vorhergehenden Ansprüche, **dadurch gekennzeichnet, dass** das Mitnahmeprofil (26) mehrere sich entlang des Grundkörpers (22) erstreckende, insbesondere identisch ausgeführte Zähne (28) hat, wobei die Zähne (28) an einer zum Führungsabschnitt (20) gerichteten Stirnseite eine Fase (30) an ihrer radial außenliegenden Kante haben.

6. Schraubendreher-Antriebsgeometrie (14) nach einem der vorhergehenden Ansprüche, **dadurch gekennzeichnet, dass** das Mitnahmeprofil (26) ein Torx-Profil ist.

7. Schraubbit mit einer Schraubendreher-Antriebsgeometrie (14), die gemäß einem der Ansprüche 1 bis 6 ausgebildet ist.

8. Schraubenkopf (32) mit einer Ausnehmung (34), die eine Abtriebsgeometrie (36) hat, welche in einem Kontaktbereich mit einer eingesteckten Schraubendreher-Antriebsgeometrie (14) nach einem der Ansprüche 1 bis 6 als Negativ der Schraubendreher-Antriebsgeometrie (14) ausgebildet ist.

## Claims

1. A screwdriver drive geometry (14), wherein the screwdriver drive geometry (14) has an axial end (16) by which it is inserted into a recess (34) in a screw, wherein the drive geometry (14) has a drive portion (18) and a cylindrical guide portion (20) which begins at the axial end (16) and is adjoined by the drive portion (18), wherein the drive portion (18) has a base body (22) and an entrainment profile (26) extending along the base body (22) and having teeth (28) protruding laterally outwards, wherein the base body (22) is axially directly adjacent to the guide portion (20) and widens conically in an axial direction away from the guide portion (20), **characterized in that** the teeth (28) start in the guide portion (20) at a distance from the axial end (16) and extend along the base body (22).

2. The screwdriver drive geometry (14) according to claim 1, **characterized in that** the teeth (28) extend into the guide portion (20) by at least 0.5 mm and a maximum of 1.5 mm, in particular a maximum of 1 mm.

3. The screwdriver drive geometry (14) according to either of the preceding claims, **characterized in that** the base body (22) widens at an angle (α) of between 5° and 15°, in particular at an angle (α) of 13°.

4. The screwdriver drive geometry (14) according to any of the preceding claims, **characterized in that** a circumferential chamfer (24) is provided at the axial end (16) of the guide portion.

5. The screwdriver drive geometry (14) according to any of the preceding claims, **characterized in that** the entrainment profile (26) has a plurality of teeth (28) which extend along the base body (22) and in particular are of identical configuration, the teeth (28) having, on a face side directed toward the guide portion (20), a chamfer (30) on their radially outer edge.

6. The screwdriver drive geometry (14) according to any of the preceding claims, **characterized in that** the entrainment profile (26) is a Torx profile.

7. A screw bit comprising a screwdriver drive geometry (14) which is configured according to any of claims 1 to 6.

8. A screw head (32) comprising a recess (34) having a driven geometry (36) which, in an area of contact with an inserted screwdriver drive geometry (14) according to any of claims 1 to 6, is designed as a negative of the screwdriver drive geometry (14).

## Revendications

1. Géométrie de commande (14) pour tournevis, la géométrie de commande (14) pour tournevis présentant une extrémité axiale (16) par laquelle elle est introduite dans un évidement (34) dans une vis, la géométrie de commande (14) présentant un tronçon de commande (18) et un tronçon de guidage cylindrique (20) partant de l'extrémité axiale (16) et auquel se joint le tronçon de commande (18), le tronçon de commande (18) présentant un corps de base (22) et un profil d'entraînement (26) qui s'étend le long du corps de base (22) et qui présente des dents (28) faisant saillie latéralement vers l'extérieur, le corps de base (22) se joignant axialement directement au tronçon de guidage (20) et s'évasant de manière conique dans un sens axial en éloignement du tronçon de guidage (20), **caractérisée en ce que** les dents (28) commencent dans le tronçon de guidage (20) à distance de l'extrémité axiale (16) et s'étendent le long du corps de base (22).

2. Géométrie de commande (14) pour tournevis selon la revendication 1, **caractérisée en ce que** les dents (28) s'étendent au moins 0,5 mm et au maximum 1,5 mm, notamment au maximum 1 mm dans le tronçon de guidage (20).

3. Géométrie de commande (14) pour tournevis selon l'une des revendications précédentes, **caractérisée en ce que** le corps de base (22) s'évase selon un angle (α) compris entre 5° et 15°, en particulier selon un angle (α) de 13°.

4. Géométrie de commande (14) pour tournevis selon l'une des revendications précédentes, **caractérisée en ce qu'**un chanfrein périphérique (24) est prévu à l'extrémité axiale (16) du tronçon de guidage.

5. Géométrie de commande (14) pour tournevis selon l'une des revendications précédentes, **caractérisée en ce que** le profil d'entraînement (26) présente une pluralité de dents (28) qui s'étendent le long du corps de base (22) et qui sont en particulier réalisées de manière identique, les dents (28) présentant sur une face frontale dirigée vers le tronçon de guidage (20) un chanfrein (30) sur leur bord radialement extérieur.

6. Géométrie de commande (14) pour tournevis selon l'une des revendications précédentes, **caractérisée en ce que** le profil d'entraînement (26) est un profil Torx.

7. Embout de vissage présentant une géométrie de commande (14) pour tournevis réalisée conformément à l'une des revendications 1 à 6.

8. Tête de vis (32) comprenant un évidement (34) qui présente une géométrie de commande (36) réalisée dans une zone de contact avec une géométrie de commande (14) pour tournevis insérée selon l'une des revendications 1 à 6 sous forme de négatif de la géométrie de commande (14) pour tournevis.
